# FASCICULE DE BREVET EUROPEEN

(11) **EP 2 021 123 B1**
(45) Date de publication et mention de la délivrance du brevet: **02.09.2009**
(21) Numéro de dépôt: 07729584.8
(22) Date de dépôt: 29.05.2007
(51) Int. Cl.: B01J 19/08, B01J 19/12, C01B 9/02, C01G 25/04, C01G 41/04, C01G 51/08

(54) **PROCEDE EN PHASE GAZEUSE POUR LA PRODUCTION DE PARTICULES NANOMETRIQUES**
GASPHASENVERFAHREN ZUR PRODUKTION VON TEILCHEN IM NANOGRÖSSENBEREICH
GASEOUS PHASE PROCESS FOR THE PRODUCTION OF NANO-SCALE PARTICLES

(30) Priorité: 30.05.2006 FR 0651959
(43) Date de publication de la demande: 11.02.2009
(73) Titulaire: Commissariat à l'Energie Atomique, 75015 Paris (FR)
(72) Inventeur: GUIZARD, Benoît, 94000 Creteil (FR); TENEGAL, François, 75014 Paris (FR)
(74) Mandataire: Ilgart, Jean-Christophe
(86) Numéro de dépôt international: PCT/EP2007/055161
(87) Numéro de publication internationale: WO 2007/138034

(56) Documents cités:
- EP-A- 0 776 862
- EP-A- 1 514 846
- WO-A-20/06028140
- WO-A2-02/086179
- US-A1- 2004 065 170

## Description

### DOMAINE TECHNIQUE

L'invention concerne un procédé en phase gazeuse pour la production de particules nanométriques.

### ÉTAT DE LA TECHNIQUE ANTÉRIEURE

Les particules nanométriques, ou nanoparticules, sont des particules ayant une taille inférieure à 100 nm dans les trois dimensions de l'espace. Du fait de leur très faible taille, ces nanoparticules présentent des caractéristiques (réactivité, effets de confinement quantiques) les rendant particulièrement attractives pour une large gamme d'applications.

Parmi toutes les applications existantes ou pressenties, on peut citer le domaine biomédical avec la mise en oeuvre de nanoparticules pour le marquage, le traçage ou la thérapie ciblée (Fe₂O₃, SiO₂, Si..), les cosmétiques (TiO₂, ZnO) avec les barrières ultra-violet (UV) ou encore les effets colorés dans les formulations.

D'autres applications dans le domaine de la catalyse ou des systèmes avancés pour l'énergie sont également possibles (Pt-TiO₂, Pd-TiO₂, fullerènes,...) . Les nanoparticules nitrures et carbures (ZrC, ZrN, TiC, TiN, SiC, Si₃N₄, WC, ..) et composites, par exemple les phases MAX pures, peuvent trouver des applications dans des domaines très variés (polissage, aéronautique, automobile, nucléaire, outils de coupe, ..). Par exemple, les nanoparticules carbures peuvent être mises en forme et frittées afin d'obtenir des céramiques denses présentant des propriétés améliorées en environnements extrêmes (hautes températures, atmosphères oxydantes, irradiations). Ces nanoparticules peuvent être associées entre elles dans le but de former des composites ayant des propriétés améliorées. Un exemple connu concerne le renforcement de matrices alumine (Al₂O₃) ou nitrure de silicium (Si₃N₄) par des particules en carbure de silicium (SiC) pour les applications outils de coupe. La mise en oeuvre de nanoparticules de type carbure permet, dans le cas de composites, d'améliorer fortement les propriétés des matrices.

Les phases MAX, citées ci-dessus, représentent une famille de composés dont la formule chimique est Mₙ₊₁AXₙ, où n vaut 1, 2 ou 3 ; M est un métal de transition (Ti, Zr, Hf, V, Nb, Ta, Cr ou Mo) ; A est A1, Si, Ge ou Ga, et X est C, N ou B. Cette famille de matériaux est caractérisée par une structure cristalline hexagonale contenant un empilement de couches nanométriques, et une faible proportion d'atomes non métalliques (25 %, 33 % et 37.5 % lorsque n vaut 1, 2 et 3, respectivement).

L'utilisation de nanoparticules permet d'affiner la microstructure des céramiques après frittage ce qui peut conduire à l'apparition d'un comportement superplastique des pièces formées. Ce comportement à déjà été mis en évidence dans le cas de composites micro/nano structurés du type Si₃N₄/SiC ou dans le SiC nanostructuré. La superplasticité est une propriété intéressante car elle peut permettre de mettre en forme des pièces céramiques suivant des géométries complexes par formage à chaud en partant de formes simples.

Un grand nombre de méthodes de production de nanoparticules existent (plasma, pyrolyse laser, combustion, évaporation-condensation, fluides supercritiques, sol gel, co-précipitation, synthèse hydrothermale...,), certaines étant plus adaptées à la production d'oxydes (combustion, évaporation-condensation, fluides supercritiques, sol gel, co-précipitation, synthèse hydrothermale...) et d'autres à la synthèse de particules non-oxydes en phase gazeuse (pyrolyse laser comme décrit dans le document référencé [1] en fin de description, plasma, évaporation-condensation).

L'ensemble de ces méthodes utilise des précurseurs gazeux et/ou liquides et/ou solides pour produire des nanoparticules métalliques, oxydes, carbures, nitrures et composites. Les précurseurs utilisés dépendent de la méthode mise en oeuvre ainsi que de la nature des nanoparticules que l'on cherche à synthétiser.

Les liquides et les solides peuvent être des précurseurs organométalliques (isopropoxydes, alkoxydes, hydroxydes, métallocènes, nitrates...) dont les molécules contiennent un élément métallique ainsi que des atomes d'oxygène et d'hydrogène mais aussi bien souvent du carbone ou encore de l'azote. Les particules organométalliques solides sont solubles dans l'eau ou dans des solvants organiques. Ces précurseurs peuvent être utilisés pour synthétiser des nanoparticules oxydes du fait que les molécules qui les constituent contiennent, dans la grande majorité des cas, de l'oxygène. Les atomes métalliques sont toujours introduits dans les procédés simultanément avec des atomes d'oxygène et/ou de carbone et/ou d'azote et d'hydrogène. Cette caractéristique est de nature à induire une contrainte sur la nature des nanoparticules formées à l'issue des procédés de synthèse. En effet, le fait que les molécules organométalliques contiennent les éléments oxygène et/ou carbone et/ou azote et hydrogène pouvant être associés à des atomes métalliques induit une contrainte sur la nature des nanoparticules formées : la présence simultanée d'atomes d'oxygène et de carbone au sein d'une seule et même molécule peut favoriser la formation de composites oxydes-carbures. Par exemple l'utilisation de molécules contenant un métal, du carbone, de l'oxygène (ou de l'azote) et de l'hydrogène dans les procédés de synthèse en phase gazeuse, tels que la pyrolyse laser, conduit à la formation de composites oxydes-carbures (ou carbure-nitrures). Un exemple est la synthèse par pyrolyse laser de poudres Si/C/O ou encore Si/C/N en utilisant respectivement de l'hexamethyldisiloxane et de l'hexaméthyldisilazane, comme décrit dans le document référencé [2]. L'obtention de nanoparticules contenant un seul type de phase (oxyde ou carbure ou nitrure) ou un mélange de phases bien déterminé et différent de celui de la molécule de départ nécessite de travailler à l'oxydation, la carburation ou la nitruration des produits dans les procédés utilisant ce type de molécules, ce qui constitue un surcoût. La présence simultanée d'oxygène et/ou de carbone et/ou d'azote dans les molécules organométalliques peut s'avérer totalement rédhibitoire lorsque l'on cherche à synthétiser des carbures, nitrures, siliciures et phases MAX pures. Par ailleurs, le coût des molécules organométalliques est élevé et augmente très rapidement avec le degré de pureté des précurseurs.

Les carbonyls sont d'autres molécules constituées d'un atome métallique entouré de groupements CO(Cr(CO)₆, Mo(CO)₆, W(CO)₆, Fe(CO)₅...) qui peuvent être utilisées pour la synthèse de certaines nanoparticules métalliques, carbures, nitrures, siliciures et de certaines phase MAX par adjonction de précurseurs carbonés (C₂H₂, C₂H₄, ...), azotés (NH₃, ..) ou encore de silicium (SiH₄, SiH₂Cl₂, ..) et de titane (TiCl₄). Cependant un inconvénient important lié à l'utilisation des précurseurs carboxyls est leur coût (voir le tableau 1 en fin de description pour quelques

### exemples).

Certains chlorures ou fluorures connus (TiCl₄, SiH₂Cl₂, WF₆, ...) peuvent aussi être utilisés pour produire des nanoparticules carbures, nitrures, siliciures et certaines phases MAX. L'avantage lié à l'utilisation de ces précurseurs est leur pureté : contrairement aux molécules organométalliques, ces molécules, en effet, ne contiennent pas d'espèces chimiques telles que l'oxygène et/ou carbone et/ou encore l'azote, espèces susceptibles de former avec le métal des phases solides oxydes, carbures et nitrures de façon mal contrôlée après synthèse. Les molécules à base d'halogènes (chlorures, fluorures) contiennent des espèces volatiles telles que du chlore ou du fluor avec dans certains cas de l'hydrogène. Ces molécules peuvent être combinées à des précurseurs de carbone (C₂H₄, C₂H₂, ..) et/ou d'azote (NH₃, ..) et/ou encore de silicium (SiH₄) afin de former des carbures et/ou nitrures et/ou siliciures. La production de masse de certaines nanoparticules oxydes (TiO₂) se fait d'ailleurs en utilisant ce type de précurseurs. Un autre avantage lié à l'utilisation de ces précurseurs est la souplesse permise quant à la composition chimique des phases formées. En effet l'introduction des constituants, en utilisant des molécules ne renfermant qu'une seule des espèces que l'on souhaite obtenir sous forme solide, offre une flexibilité inégalée. Il est possible de former des phases siliciures (TiₓSi_{y}, ...) et composites dont on peut ajuster à volonté la composition chimique en injectant à débit contrôlé les différents réactifs amenant de façon séparée les atomes constituants les phase que l'on souhaite former.

D'autres particules solides (ou poudres) peuvent être utilisées pour la synthèse de nanoparticules en phase gazeuse. Ces dernières sont des particules inorganiques insolubles. Un avantage de taille lié à l'utilisation de poudres est le coût. En effet, l'utilisation de poudres en lieu et place de précurseurs issus de la chimie peut permettre de gagner un facteur 10 sur le coût de production (voir le tableau 1 en fin de description pour quelques exemples). Les poudres peuvent être utilisées en tant que précurseur dans les procédés de synthèse caractérisés par un apport massif et rapide d'énergie et conduisant à la vaporisation des constituant de la poudre puis à la germination de particules dont la croissance est bloquée par effet de trempe. Un exemple est la synthèse par plasma de nanoparticules en utilisant des poudres. Cependant les rendements de synthèse par ce procédé sont peu élevés car la vaporisation des constituants de la poudre est loin d'être totale.

Un autre exemple de l'utilisation de précurseurs solides inorganique est la synthèse de nanoparticules métalliques ou oxydes par évaporation-condensation. Cependant ces procédés ne permettent pas la synthèse de nanoparticules constituées d'éléments métalliques réfractaires à haut points de fusion (Zr, W, Mo, ...).

Le problème technique posé par l'état de l'art est donc la synthèse à bas coût d'une large gamme de nanoparticules de type métallique, carbure, nitrure, oxyde, siliciure, et composite dont les phases MAX contenant ou non des métaux réfractaires (W, Zr, Mo, ..). Pour les métaux réfractaires, il s'agit notamment de trouver un procédé à coût optimisé permettant d'injecter dans une zone réactionnelle les métaux réfractaires à point de fusion élevé, en quantités importantes et en mettant en oeuvre des températures les plus basses possibles.

L'invention a pour objet de résoudre ce problème technique en proposant un procédé en phase gazeuse pour la production à bas coût de particules nanométriques d'une pureté élevée.

### EXPOSÉ DE L'INVENTION

L'invention concerne un procédé en phase gazeuse pour la production de particules nanométriques dans un réacteur de production de particules en phase gazeuse, dans lequel il y a interaction entre un flux réactionnel et un flux d'énergie, caractérisé en ce qu'il comprend les étapes suivantes :
- une étape de couplage d'un appareil de production de chlorures gazeux à ce réacteur,
- une étape de production de chlorures gazeux à partir d'un précurseur de base sous forme de poudres telle que définie dans la revendication 1 et,
- une étape d'injection du flux réactionnel ainsi formé dans le réacteur.

Les particules nanométriques peuvent être des particules métalliques.

Dans un mode de réalisation avantageux, le procédé de l'invention comprend, en outre, une étape de combinaison des chlorures gazeux avec au moins un autre précurseur pour former le flux réactionnel, avant l'étape d'injection de ce flux réactionnel dans le réacteur.

Les particules nanométriques peuvent alors être des particules carbures, nitrures, oxydes, siliciures et composites, par exemple des phases MAX pures.

Les particules nanométriques peuvent comprendre des matériaux réfractaires à point de fusion élevé tels que : W, Zr, Co...

Les chlorures métalliques gazeux sont produits dans l'appareil de production de chlorures par chauffage de poudres métalliques et réaction avec de l'acide chlorhydrique à des températures inférieure à 1000°C, et même inférieure à 500°C.

Dans un exemple de réalisation avantageux, la poudre métallique est une poudre métallique de zirconium. Le flux d'énergie est émis par un laser CO₂ ou CO. Le précurseur carboné est de l'éthylène. Le flux d'énergie peut également être émis par une torche à plasma.

Ce procédé, avantageusement, permet d'injecter séparément tous les constituants des particules nanométriques que l'on souhaite former, et de favoriser la production de particules multi-éléments dont on peut varier à volonté la composition chimique en variant de façon indépendante les débits de chacun des précurseurs.

Ce procédé permet, également de générer et d'injecter en quantités importantes des métaux réfractaires (Zr, W, Mo, Ta...) sous forme de molécules chlorées gazeuses à un coût optimisé en utilisant uniquement des poudres commerciales du métal réfractaire et de l'acide chlorhydrique (HCl).

Ce procédé présente l'avantage d'être peu coûteux car il permet d'utiliser des poudres commerciales qui sont les précurseurs les moins chers à degré de pureté égal avec les autres précurseurs connus. Le fait de chlorurer in-situ les poudres commerciales dans ce procédé de synthèse de particules nanométriques permet de gagner jusqu'à un facteur dix sur le coût de production par rapport à l'utilisation des chlorures commerciaux.

### BRÈVE DESCRIPTION DES DESSINS

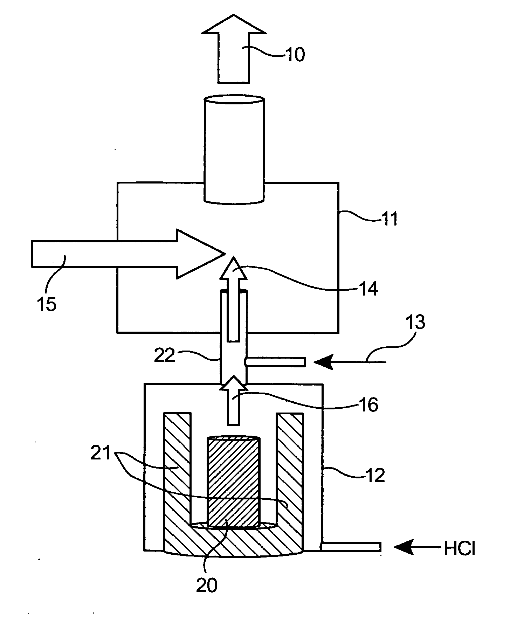

La figure unique illustre un dispositif mettant en oeuvre le procédé de l'invention.

### EXPOSÉ DÉTAILLÉ DE MODES DE RÉALISATION PARTICULIERS

Comme illustré sur la figure, l'invention concerne un procédé en phase gazeuse pour la production de particules nanométriques métalliques, éventuellement de particules nanométriques carbures, nitrures, oxydes, siliciures ou composites, par exemple des phases MAX, pures 10 dans un réacteur 11 de production de particules en phase gazeuse à partir de chlorures gazeux 16, générés par un chlorurateur 12. Ce chlorurateur 12 permet, en effet, de générer ces chlorures gazeux 16 à partir de poudres 20 (précurseur de base), par chauffage à des températures inférieures à 1000°C et de préférence inférieures à 500°C, par exemple à l'aide de résistances chauffantes 21, et réaction avec de l'acide chlorhydrique (HCl)). Ces chlorures gazeux 16 peuvent être injectés dans le réacteur 11 avec un ou plusieurs autres précurseurs 13, par exemple de l'éthylène (C₂H₄) .

Dans ce procédé il y a interaction entre un flux réactionnel 14 contenant ces chlorures gazeux 16 émanant du chlorurateur 12 et éventuellement ce (ou ces) autres précurseur(s) 13, et un flux d'énergie 15.

Ce flux d'énergie 15 permet de réaliser un transfert d'énergie suffisant au flux réactionnel 14 pour générer une réaction de pyrolyse du mélange, qui est caractérisée par la décomposition des réactifs suivie de la germination de particules, dont la croissance est bloquée par effet de trempe.

La source du flux d'énergie 15 peut être un laser (procédé pyrolyse laser) ou une torche plasma (procédé plasma).

Dans le cas de l'utilisation d'un laser, ce dernier peut être un laser au CO₂ ou un laser au CO.

### Exemple de la production de nanoparticules en ZrC pures par pyrolyse laser en utilisant un laser au CO₂.

Dans cet exemple on utilise un réacteur 11 de pyrolyse laser, connecté au chlorurateur 12, une poudre 20 de zirconium (précurseur de base) est introduite dans le chlorurateur 12 sous atmosphère inerte de sorte d'éviter les effets pyrophoriques au contact de la poudre avec l'air.

La poudre est chauffée jusqu'à plus de 450°C et balayée par un flux d'acide chlorhydrique (HCl) gazeux afin de chlorurer les vapeurs. Ces vapeurs sont ensuite transportées via une buse d'injection 22 dans le réacteur 11 de pyrolyse laser. La buse 22 est chauffée à plus de 300°C pour éviter la condensation de ZrCl₄ dans les canalisations avant la réaction de synthèse. Le précurseur gazeux 13 est de l'éthylène (C₂H₄). Il est introduit au niveau de la buse d'injection 22 en mélange avec le ZrCl₄. Il a été choisi car il absorbe le rayonnement 15 du laser infrarouge à 10.6 microns (longueur d'onde du laser CO₂) et redistribue l'énergie au milieu de sorte qu'une réaction avec flamme apparaît. Cette réaction traduit la décomposition des précurseurs suivie de la germination de particules nanométriques dont la croissance est stoppée par effet de trempe. La source du flux d'énergie 15 est un laser au CO₂ de 5 kW.

Le coût de production de 1 kg/h de nanoparticules de Zirconium par la voie chlorurateur est de l'ordre de 1300 € (le coût des précurseurs est conditionné par le coût de celui amenant le zirconium, les autres pouvant être négligés).

La pureté obtenue est celle de la poudre de départ, i.e. celle de zirconium telle que donnée dans le tableau 1 ci-après soit de l'ordre de 99,7%.

Le tableau 1 permet de comprendre que le procédé de l'invention permet de diminuer les coûts de façon drastique, puisque par exemple le zirconium sous forme de poudre coûte de l'ordre de 1300€ par kilogramme alors que le chlorure de Zirconium (ZrCl₄) commercial coûte de l'ordre de 5700€ par kilogramme de métal.

**Tableau 1**

| | | | |
|---|---|---|---|
| Comparaison du prix approximatif de quelques précurseurs pour quelques métaux réfractaires | | | |

| Elément métallique et précurseurs associés | Prix (€/kg) | Pureté (%) | Prix du kg de métal (€/kg) |
|---|---|---|---|
| ***W*** | | | |
| W(CO)₆ | 16000 | 99.9 | 30000 |
| WF₆ | 29000 | 99.9 | 47000 |
| W(Cl₆) | 1710 | 99.9 | 3700 |
| W (poudre 1-10 µm) | 154 - 316 | 99.9 | 154-316 |
| ***Zr*** | | | |
| Zr(Cl₄) | 2237 | 99.9 | 5700 |
| ZrF₄ | 2700 | 99.9 | 5000 |
| Zr (poudre <20 µm) | 1310 | 99.7 | 1310 |
| ***Mo*** | | | |
| Mo(CO)₆ | 9740 | 99.9 | 27000 |
| Mo(Cl₅) | 14400 - 1259 | 99.99 - 98 | 41000 - 3600 |
| MoF₆ | 13480 | 99.9 | 29500 |
| Mo (poudre 1-2 µm) | 355 | 99.9 | 355 |

### REFERENCES

[1] Article intitulé « Sinterable Ceramic Powders from laser - Driven Reactions : I, Process Description and Modeling » de W. R. Cannon, S. C. Danforth, J. H. Flint, J. S. Haggerty et R.A. Marra (Journal of the American Ceramic Society, Volume 65, No. 7, pages 324-239, Juillet 1982).
[2] Article intitulé « Nanometric Si-Based Oxide Powders : Synthesis by laser Spray Pyrolysis and Characterization » de Nathalie Herbin, Xavier Armand, Emmanuel Musset, Hervé Martinengo, Michel Luce et Michel Cauchetier (Journal of the European Ceramic Society, 16, 1996, pages 1063 à 1073).

## Revendications

1. Procédé en phase gazeuse pour la production de particules nanométriques (10) dans un réacteur (11) de production de particules en phase gazeuse, dans lequel il y a interaction entre un flux réactionnel (14) et un flux d'énergie (15), **caractérisé en ce qu'**il comprend les étapes suivantes :
- une étape de couplage d'un appareil de production de chlorures gazeux (121 à ce réacteur (11),
- une étape de production de chlorures métalliques, gazeux dans l'appareil de production de chlorures par chauffage d'un précurseur de base sous forme de poudres métalliques (20) et réaction avec de l'acide chlorhydrique à des températures inférieures à 1000°C et,
- une étape d'injection du flux réactionnel ainsi formé (14) dans le réacteur (11).

2. Procédé selon la revendication 1, dans lequel les particules nanométriques sont des particules métallique.

3. Procédé selon la revendication 1, comprenant, en outre, une étape de combinaison des chlorures gazeux 16 avec au moins un autre précurseur (13) pour former le flux réactionnel (14).

4. Procédé selon la revendication 3, dans lequel les particules nanométriques sont des particules carbures, nitrures, oxydes, siliciures ou composites.

5. Procédé selon la revendication 4, dans lequel les particules composites sont des phases MAX pures.

6. Procédé selon l'une quelconque des revendications précédentes, dans lequel les particules nanométriques contiennent des métaux réfractaires à point de fusion élevé.

7. Procédé selon la revendication 6, dans lequel les métaux réfractaires sont pris parmi les métaux suivants : W, Zr, Co.

8. Procédé selon la revendication 1, dans lequel la température est inférieure à 500°C.

9. Procédé selon la revendication 1, dans lequel on injecte séparément tous les constituants desdits particules nanométriques.

10. Procédé selon la revendication 1, dans lequel le flux d'énergie est émis par un laser au CO₂ ou au CO, ou une torche à plasma.

11. Procédé selon la revendication 1, dans lequel le au moins un autre précurseur (13) comprend de l'éthylène.

## Claims

1. A gas phase method for producing nanometric particles (10) in a reactor (11) for producing particles in a gas phase, in which there is an interaction between a reaction flow (14) and an energy flow (15), **characterized in that** it comprises the following steps:
- a step for coupling a device for producing gaseous chlorides (12) with this reactor (11),
- a step for producing gaseous chlorides in the device for producing gaseous chlorides by heating a base precursor in the form of metallic powders (20) and reacting them with hydrochloric acid at temperatures below 1,000°C, and
- a step for injecting the thereby formed reaction flow (14) into the reactor (11).

2. The method according to claim 1, wherein the nanometric particles are metal particles.

3. The method according to claim 1, further comprising a step for combining gaseous chlorides (16) with at least one other precursor (13) in order to form the reaction flow (14).

4. The method according to claim 3, wherein the nanometric particles are carbide, nitride, oxide, silicide or composite particles.

5. The method according to claim 4, wherein the composite particles are pure MAX phases.

6. The method according to any of the preceding claims, wherein the nanometric particles contain refractory metals with a high melting point.

7. The method according to claim 6, wherein the refractory metals are taken from the following metals: W, Zr, Co.

8. The method according to claim 1, wherein the temperature is below 500°C.

9. The method according to claim 1, wherein all the constituents of said nanometric particles are injected separately.

10. The method according to claim 1, wherein the energy flow is emitted by a CO₂ or CO laser, or a plasma torch.

11. The method according to claim 1, wherein said at least one other precursor (13) comprises ethylene.

## Patentansprüche

1. Gasphasenverfahren zur Herstellung von Zeichen im Nanogrößenbereich (10) in einem Reaktor (11) zur Herstellung von Teilchen in der Gasphase, wobei es zu einer Wechselwirkung zwischen einem Reaktionsfluss (14) und einem Energiefluss (15) kommt, **dadurch gekennzeichnet, dass** es die folgenden Schritte umfasst:
- einen Schritt, in welchem eine Vorrichtung zur Herstellung gasförmiger Chloride (12) mit diesem Reaktor (11) gekoppelt wird,
- einen Schritt, in welchem gasförmige Metallchloride in der Vorrichtung zur Herstellung von Chloriden hergestellt werden, indem ein Vorläufer-Grundstoff in Form von Metallpulvern (20) erhitzt und bi Temperaturen von weniger als 1000 °C mit Salzsäure umgesetzt wird, und
- einen Schritt, in welchem der auf diese Weise gebildete Reaktionsfluss (14) in den Reaktor (11) eingeleitet wird.

2. Verfahren nach Anspruch 1, wobei es sich bei den Teilchen im Nanogrößenbereich um Metallteilchen handelt.

3. Verfahren nach Anspruch 1, das darüber hinaus einen Schritt umfasst, in welchem die gasförmigen Chloride 16 mit mindestens einem weiteren Vorläuferstoff (13) kombiniert werden, um den Reaktionsfluss (14) zu bilden.

4. Verfahren nach Anspruch 3, wobei es sich bei den Teilchen im Nanogrößenbereich um Carbide, Nitride, Oxide, Silicide oder Verbundstoffe handelt,

5. Verfahren nach Anspruch 4, wobei es sich bei den Verbundstoffteilchen um reine MAX-Phasen handelt.

6. Verfahren nach einem beliebigen der vorhergehenden Anspruche, wobei die Teilchen im Nanogrößenbereich hitzebeständige Metalle mit hohem Schmelzpunkt enthalten.

7. Verfahren nach Anspruch 6, wobei die hitzebeständigen Metalle aus den folgenden Metallen gewählt sind: W, Zr, Co.

8. Verfahren nach Anspruch 1, wobei die Temperatur geringer als 500 °C ist.

9. Verfahren nach Anspruch 1, wobei alle Bestandteile der Teilchen im Nanogrößenbereich getrennt voneinander eingeleitet werden.

10. Verfahren nach Anspruch 1, wobei der Energiefluss von einem CO₂- oder CO-Laser oder einer Plasmafackel ausgesendet wird.

11. Verfahren nach Anspruch 1, wobei der mindestens eine weitere Vorläuferstoff (13) Ethylen umfasst.
